Europäisches Patentamt

(19) European Patent Office

Office européen des brevets

(11) Publication number: **0 257 779**
**B1**

(12) **EUROPEAN PATENT SPECIFICATION**

(45) Date of publication of the patent specification:
23.08.89

(21) Application number: **87306415.8**

(22) Date of filing: **20.07.87**

(51) Int. Cl.⁴: **F16F 9/08,** F16F 9/49,
F16F 9/50, B60G 15/12

(54) **Air spring damper for vehicle suspension.**

(30) Priority: **13.08.86 US 896452**

(43) Date of publication of application:
**02.03.88 Bulletin 88/9**

(45) Publication of the grant of the patent:
**23.08.89 Bulletin 89/34**

(84) Designated Contracting States:
**DE FR GB IT SE**

(56) References cited:
**BE-A- 533 396**

(73) Proprietor: **GENERAL MOTORS CORPORATION,**
**General Motors Building 3044 West Grand Boulevard,**
**Detroit Michigan 48202(US)**

(72) Inventor: **McClain, Michael J., 907 Cascade Drive,**
**Dayton Ohio 45431(US)**
Inventor· **Pees, James Mitchell, 633 Britton Drive,**
**Dayton Ohio 45429(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

## Description

This invention relates to an air spring damper for vehicle suspensions as specified in the preamble of claim 1, for example as disclosed in US-A-3 212 769.

The invention is concerned with providing a new and improved air spring damper which is capable of giving effective pneumatic spring suspension of a vehicle body with respect to an axle of the vehicle, and includes an internal damper that is capable of effectively damping both the natural frequency of vehicle ride and the natural frequency of the vehicle body, and thereby providing optimised overall damping of the different natural frequencies of the vehicle axle and the vehicle body.

To this end an air spring damper in accordance with the present invention is characterised by the features specified in the characterising portion of claim 1.

The invention thereby has the potential to make available a new and improved lightweight pneumatic suspension and damper unit that provides improved isolation of the vehicle body with respect to the axle or other road wheel support and separation of the damping of the wheel axle and vehicle body.

With the use of an air spring damper in accordance with the present invention, air spring and frequency damping properties can adapt to service load changes.

The air spring damper in accordance with the present invention can be employed in a height control system such that constant vehicle trim is readily obtained by introducing pressure air into, and removing it from, the air suspension spring.

Furthermore, a constant ride frequency can be obtained, with the spring rate changing with the pressure within the damper, together with constant relative damping, with damping changing with pressure.

The air spring damper in accordance with the present invention may utilise frequency sensing damping with the air compressible above the natural frequency of the axle, whereby above this natural frequency the damper becomes a spring to store the vibratory energy while providing optimised isolation of the vibrations that would be transmitted through a suspension utilising a mechanical or air spring combined with a hydraulic damper.

The air spring damper in accordance with the present invention can provide high damping force at resonant or natural vibration frequencies and reduced damping force at other frequencies, and particularly at super-critical frequencies, so that vibratory energy is not fed into the body of the vehicle.

In a preferred embodiment of an air spring damper in accordance with the present invention, the air spring damper includes upper, intermediate and lower chambers, and incorporates a reservoir tube which has an anti-friction rod guide and bearing assembly therein that lubricates the rod of a piston as it strokes in the reservoir tube. An elastomeric air sleeve is connected to a top mount that pivotally connects the piston rod to the vehicle body while sealing the upper end of the air sleeve. The air sleeve is supported by an outer elastomeric sleeve for giving a full-time and improved type of air sleeve support. A jounce bumper mounted internally of the reservoir tube is compressible to resist and cushion jounce strokes of the piston.

By the use of an air spring damper in accordance with the present invention, it is possible to achieve improved vehicle control with maximum damping at natural axle or wheel support frequency which is limited by design, and decreased damping beyond this point, thereby resulting in small travel of the body reduced by body mass acceleration.

With the use of an air spring damper in accordance with the present invention, it is possible for a higher degree of damping to be added at the natural frequency of the vehicle body, for lower body mass resonant ratio.

Further, the minimum required axle damping can be obtained, with the minimum force necessary for damping resulting in minimum body mass acceleration.

The air spring damper in accordance with the present invention may include an orifice restrictor formed from valve plates (discs) and having a size, as determined by the thickness and the number of the plates, which determines the frequency at which maximum damping occurs.

With an air spring damper in accordance with the present invention, the size does not change the maximum work involved.

Also, the orifice preload can be increased, to increase body damping.

Other advantageous features available with the use of an air spring damper in accordance with the present invention include potentially low internal friction within the air spring damper, by the use of a 'dry bearing' for the piston rod having sufficient lubricity to allow the overall unit to have a long service life, and also the possibility of obtaining a desirable weight and size reduction, with the air spring and damper unitised in a small lightweight package as compared with other suspension and damper units.

In the drawings:

Figure 1 is a fragmentary isommetric partially exploded view of a portion of a rear suspension of a vehicle, including a preferred embodiment of an air spring damper in accordance with the present invention;

Figure 2 is an enlarged sectional view of the air spring damper shown in Figure 1, employed in the rear suspension of Figure 1, on the line 2--2 of Figure 1, in the direction of the arrows;

Figure 3 is a fragmentary enlarged view, partly in elevation and with parts shown broken away and in section, of a portion of the air spring damper unit of Figure 2, illustrating a piston assembly of this unit;

Figure 4 is an enlarged sectional view of a portion of the piston valving of the piston assembly, and is a detail corresponding to the circled area 4 of Figure 3;

Figure 5 is a diagrammatic view of a control system for an air spring damper in accordance with the present invention;

Figure 6 is a curve illustrating jounce and rebound operation of the air spring damper of Figure 1; and

Figure 7 is another curve illustrating operation of the air spring damper of Figure 1.

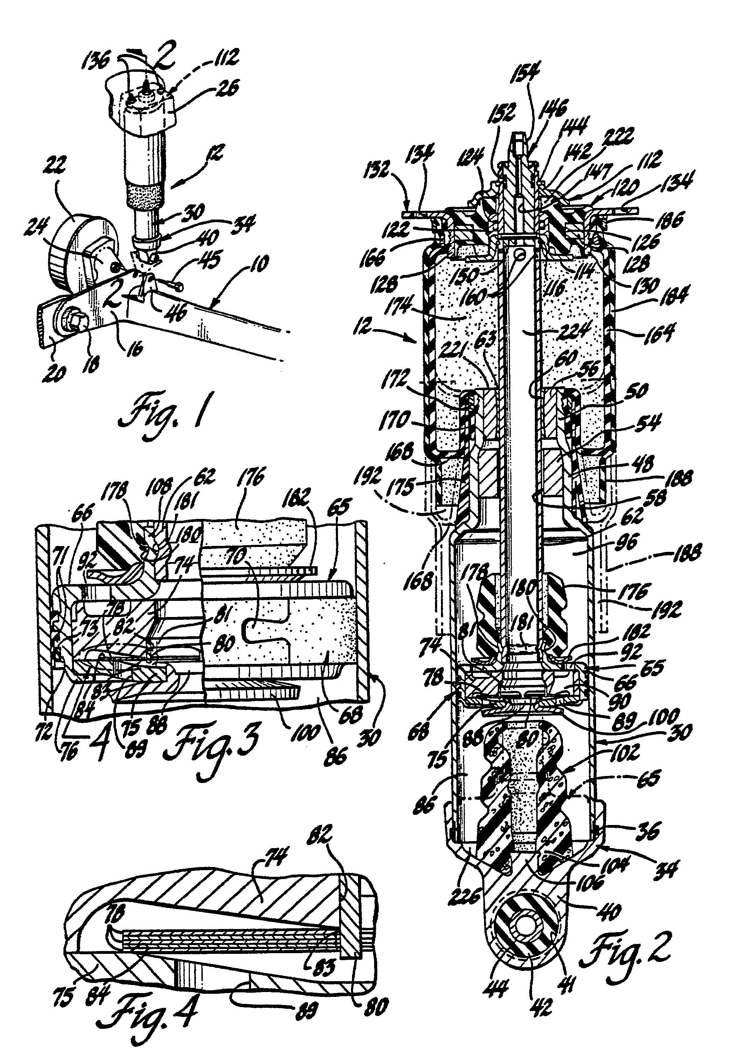

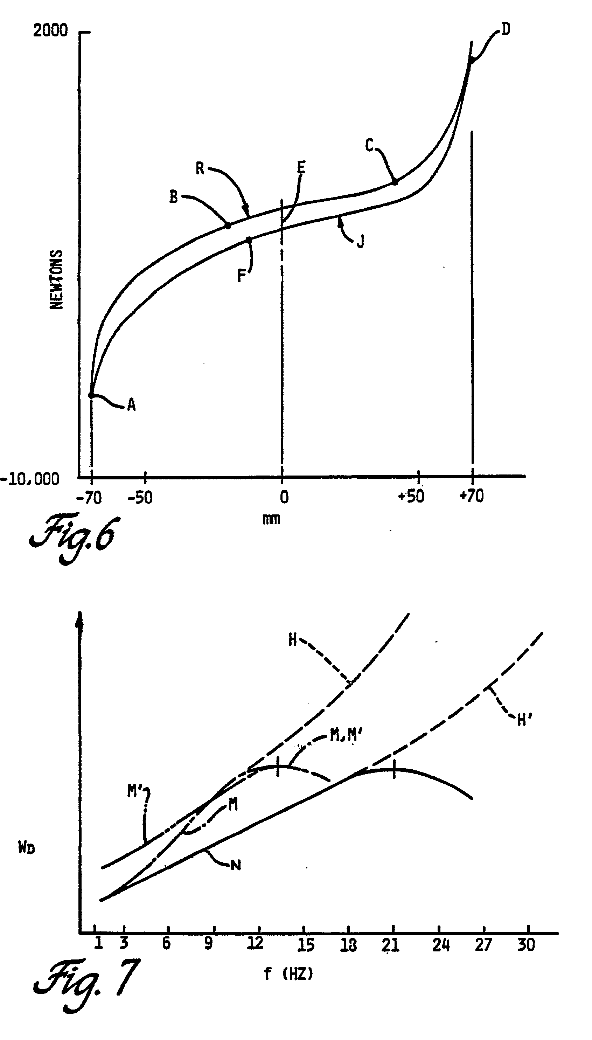

With reference now to the drawings, there is shown in Figure 1 the right-hand side of a trailing-arm type of rear axle 10 with an air spring damper 12 in accordance with the present invention providing the suspension of the right-hand rear corner of an automotive vehicle. The left-hand side of the axle and the associated left-hand rear corner air spring damper 12, diagrammatically shown in Figure 5, are substantially the same as the components on the right-hand side.

A pair of control arms, in the form of trailing arms, with only the right-hand arm 16 being shown, are welded to the axle 10, and extend forwardly therefrom into pivotal connection by means of a pivot bolt 18 to support structure 20 connected to the vehicle body.

A right-hand rear wheel drum 22 for mounting a conventional road wheel is operatively secured to the end of the axle 10 by means of a drum support 24, which thus forms a support for the wheel. Support for the left-hand rear wheel drum is provided in substantially the same way as for the right-hand rear wheel drum.

The control arms with the identical right-hand and left-hand air spring dampers 12, 12 as well as an optional track bar, not shown, maintain the geometrical relationship of the rear axle with respect to the vehicle body, partially shown at 26 as part of the mounting tower.

The air spring dampers provide for optimised handling characteristics by damping the differing natural frequencies of the axle and the body of the vehicle during vehicle operation as well as by controlling vehicle roll such as when cornering.

Each air spring damper has, in this specific embodiment, a one-piece bottle-shaped reservoir tube 30 formed from aluminium, or other suitable material could be used. The reservoir tube has a lower end annularly welded or otherwise secured in an airtight manner to a base cup 34. An O-ring seal 36, disposed between the outside diameter of the reservoir tube 30 and the inside diameter of the base cup 34, also prevents leakage of air from the interior of the air spring damper. The base cup 34 has a depending lower mount 40 with a transverse cylindrical opening 41 which receives an elastomeric isolator 42 preloaded between the wall of an opening 41 and an internal cylindrical bearing sleeve 44. This preloaded rubber-like isolator resiliently deflects to absorb vibratory energy, and potentially has long service life due to the preload. The bearing sleeve 44 receives a pivot bolt 45 which pivotally secures the air spring damper 12 to the axle by way of the trailing arm 16 and a laterally spaced support 46 projecting upwardly from the top of the axle.

From the base cup 36, the reservoir tube 30 extends upwardly as a cylindrical main body for about two-thirds of its overall length, and it is double-stepped diametrically down as shown at 48 and 50 along the upper one-third of its length. The intermediate step 48 has a cylindrical metallic rebound stop 54 secured thereto, and the upper and smallest-diameter step has a cylindrical metallic rod guide 56 secured to the inner wall thereof. The rebound stop 54 and the rod guide 56 have aligned central cylindrical openings 58 and 60 to accommodate a hollow cylindrical piston rod 62 that is slidably mounted therein. To eliminate looseness and play between the rod guide 56 and the piston rod 62, an elongate cylindrical anti-friction bearing 63 is press-fitted on to the inner wall defining the rod guide opening 60.

A tie bearing 63 is formed from sintered bronze and polytetrafluorethylene (Teflon) material, and when installed in the rod guide 56 provides a low-friction bearing for the rod guide. The molecules of the polytetrafluorethylene are aligned in the direction of piston rod travel, for reduced friction. As the rod guide strokes in this bearing, the bronze heats the entrapped polytetrafluorethylene so that it partially liquefies and flows, for increased lubricity to further reduce sliding friction. The central opening 60 of the rod guide is preferably slightly flared at the ends thereof to accommodate motions of the piston rod during operation and to facilitate installation of the bronze-polytetrafluorethylene bearing 63.

Secured to the lower end of the tubular piston rod 62 is a valved piston assembly 65 which includes a generally cylindrical shell 66 dimensioned to slidably fit within the reservoir tube. More particularly, the piston shell 66 carries an overlapping band-type annular seal 68 of graphite-filled polytetrafluorethylene (Teflon) or other suitable anti-friction material. The sealing band has its free ends mortised by the tongue and slot connection 70 shown in Figure 3.

The piston shell 66 has three annular grooves on the outside diameter thereof, the upper two of which receive inwardly extending rectilinear ridges 71 of the seal 68 to connect the sealing band 68 to the shell 66. An internal O-ring 72 of a resilient elastomeric material is mounted in a lower groove 73 in the shell, and contacts the interior surface of a lower skirt portion of the relatively wide seal 68 to provide a radial spring for urging the seal radially outwardly into 360° sealing and sliding contact with the inner wall of the reservoir tube 30. This provides for optimised piston reservoir sealing as compared with prior band-type seals of this kind.

The piston assembly has an orifice plate 74 trapped within the shell 66 by a lower dished carrier plate 75 that is retained in position by a spun-over lower annular lower edge 76 of the shell. Operatively mounted between the orifice plate 74 and the carrier plate 75 are a plurality of washer-like valve discs (plates) 78, best seen in Figure 4, which are subject to deflection when stroked, for metering the flow of air through the orifice plate 74 and the carrier plate 75 to damp the jounce and rebound action of the air spring damper 12.

More particularly, the valve discs 78 are thin metallic spring washer members which have respective central openings that fit on to downwardly extending and radially spaced fingers 80 of a cylindrical support 81 that is pressed into the central opening 82 of the orifice plate 74. The uppermost of the valve discs 78 sealingly seat against the annular inner shoulder 83 of the orifice plate, and extend outwardly on to a lower annular seating surface 84 of the carrier plate 75, to block the flow of air through the piston assembly 65 when not moving in jounce or rebound motion.

On jounce, the piston strokes into the reservoir, and the spring discs 78 deflect upwardly at their outside diameter, shown in Figure 4, to restrict and meter the flow of air from the contracting lower chamber 86 through central passages 88 and radially outer passages 89 in the carrier plate 75, past the shoulder 84, through an orifice plate passage 90 and through upper openings 92 in the piston shell 66 and to an expanding intermediate chamber 96 above the piston.

On rebound, when the air spring damper is elongating, air in the collapsing intermediate chamber 96 is forced through the piston to deflect the inner diameter of the discs 78 downwardly away from the shoulder 83. When the discs deflect, air is metered into the lower chamber 86. The restriction of flow provided by the spring discs checks the jounce and rebound spring action, to provide improved vehicle control and occupant comfort.

The carrier 75 mounted to the lower end of the piston 65 carries a conical washer-like contact plate 100 which engages the upper end of the centrally cored and generally cylindrical jounce bumper 102 of microcellular resilient foam material comprising polyurethane or other suitable material. The bumper 102 is a multi-lobed or ribbed member which has a reduced lower end 104 that closely fits in the base cup 34 and is centrally mounted on an upwardly extending stud 106 projecting from the base cup. As the damper contracts (collapses) in jounce, the jounce bumper 102 is compressed to a fraction of its undeflected size, to control and cushion jounce action. At full jounce, as indicated by the dotted-line position of the piston assembly 65, the jounce bumper is fully compressed, to effectively cushion large jounce motions.

The piston shell 66 has an upstanding neck 108 secured to the lower end of the tubular piston rod 62. The piston rod 62 extends upwardly from the neck through the rebound stop 54 and rod guide bearing 63 into operative connection with the sprung portion of the vehicle, through a top (upper) mount assembly 112. The top mount assembly isolates and provides a limited pivotal connection joining the piston rod to the sprung portion of the vehicle.

The top (upper) mount assembly 112 isolates the piston rod from the vehicle body so that vibrations are not transmitted to the interior of the vehicle. The upper mount is an effective pivot connection for the piston rod, and serves as an upper seal for the air spring which is clamped directly thereto. The mount assembly is seated on a metallic rate washer 114 fixed against downward axial movement on the piston rod 62 by a hog-ring 116 fitted in a groove in the upper end of the piston rod 62. The top mount assembly comprises a generally torus-like main isolator body 120 of a resilient elastomeric material having at its internal diameter a generally cylindrical and metallic connector 122 which is bonded to the interfacing internal wall of the isolator body. An O-ring 124 between the connector 122 and the piston rod 62 prevents the escape of gas from the interior of the gas spring hereinafter described.

The main isolator body 120 is grooved at 126 to carry a thick washer-like connector ring 128 that is secured to the depending neck 130 of a mounting plate 132. The top flange of this mounting plate has openings 134 which receives threaded fasteners 136 that secure the top mount assembly 112 to the mounting tower 26 or other bodywork of the vehicle. The elastomeric isolator body 120 is preloaded, being trapped between the lower rate washer 114 and an upper washer-like retainer 142 that is held in a fixed position by a hog-ring 144 seated in an upper annular groove in the piston rod.

An air fitting 146, having a central axially extending air passage 147 leading to the interior of the piston rod, is fitted into the upper end of the piston rod and is secured in position by means of a cross-pin 150. O-ring seals 152, operatively disposed between the cylindrical main body of the fitting and the internal wall of the piston rod, block the escape of pressure air from the air spring provided by this unit, as will be described. The upper end 154 of the air fitting 146 receives a mating fitting 156 of the air lines 158 or 159 of the height control system diagrammatically illustrated in Figure 5.

The piston rod has openings 160 formed therein just under the rate washer 114, which in conjunction with the air passage 147 in the fitting 146 provide pneumatic communication with the air suspension spring formed by an elastomeric air sleeve 164 with internal woven fabric reinforcement such as described in US-A-4 412 965, in UK-A-873 348 or in UK-A-1 446 448.

The elastomeric air sleeve 164 is a generally cylindrical unit having its upper end secured in airtight fashion to the neck 130 of the mounting plate by means of the constricted ring 166. From this connection, the elastomeric sleeve 164 extends downwardly to a reversely curved rolling lobe 168, and from the rolling lobe 168 upwardly as a smaller-diameter inner portion 170 into a terminal air-tight connection to the upper extremity 50 of the reservoir tube by constriction of a retainer ring 172.

The air-tight connection of the sleeve 164 to the reservoir tube and the top mount forms an air spring chamber 174 which, when supplied with sufficient pressure air from the control system of Figure 5 or from any other suitable source, provides the air spring suspension and effective isolation of the vehicle body, represented by the tower 26, from the axle 10 of the vehicle.

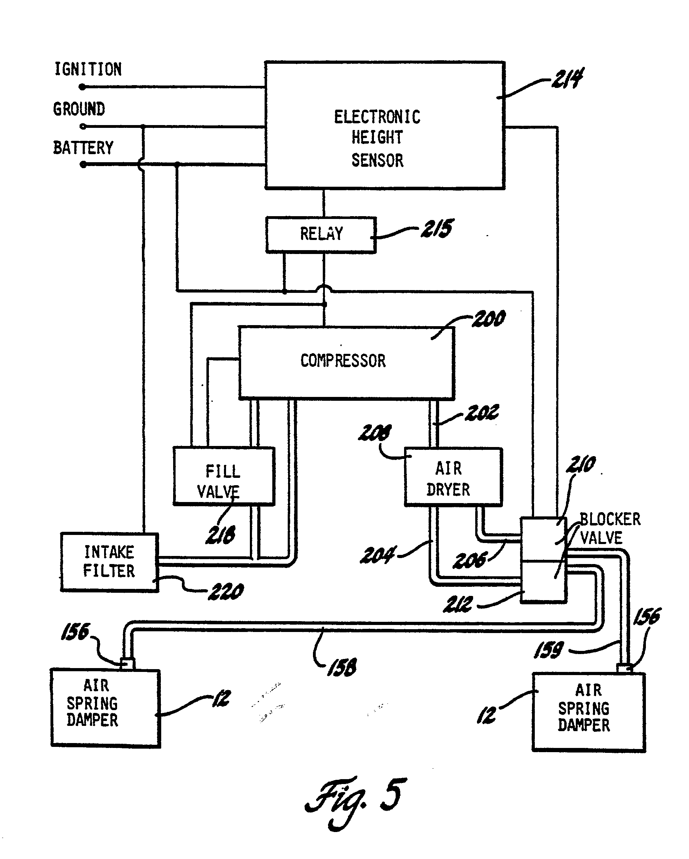

The air spring sleeve 164 rolls along the outer surface of a profiled contact piston 175 which is generally cylindrical and has increased diameter as the lobe rolls towards its full-jounce position, as shown in the lower dotted lines in Figure 2, so that the spring rate can be selected as needed. This piston 175 slip-fits over the stepped upper portions of the reservoir tube, for good support of the air spring. Importantly, the upper end of the piston 175 covers the retainer ring 172, so that the ring cannot contact and wear the air sleeve. The piston is of a hard plastics material, and provides an optimised surface to accommodate the rolling lobe with reduced friction.

The air spring damper unit of this invention incorporates a cylindrical rebound bumper 176 of resilient elastomeric material that fits around the piston rod 62 and is formed with an internal attachment ring 178 that resiliently fits in a groove 180 rolled in the upstanding neck of the piston shell 66, which in turn interlocks with an annular groove 181 in the lower end of the piston rod. The rolled grooves securely connect the piston shell to the end of the piston rod, as best seen in Figure 3. Operatively disposed around the piston rod 62 and between the lower end of the rebound bumper and the upper surface of the piston shell is a rate washer 182 which assists in controlling the rate of the rebound bumper as it deflects on contact with the rebound stop 54 when the unit is in rebound. Resistance to rebound is cushioned and progressively increased by the rebound bumper as the damper strokes to full rebound.

An air spring damper in accordance with the present invention may incorporate rigid outer support tubes of metal or plastics material to provide fixed radial support of the elastomeric air spring sleeve 164. However, the preferred embodiment of this invention has a radially resilient support sleeve 184. This support sleeve 184 is similar to the air spring sleeve, and preferably comprises a cord-reinforced elastomeric cylinder. The cords are biased, and the warp and woof (weft) will pantograph during support action for the air sleeve. The support sleeve 184 is tightly secured at its upper end and around the upper end of the air spring sleeve 164 by means of a constricted band 186. From the top connection provided by the band 186, the cylindrical resilient support sleeve 184 extends downwardly along and in contact with the outside of the air spring sleeve 164 to provide a reduced-diameter terminal end 188 below the rolling lobe 168.

The support sleeve is of a reduced diameter as compared with the air sleeve, and is sized to expand and contract with the air sleeve as the air sleeve changes in diameter during jounce and rebound. Thus the support sleeve 184, in contrast to a fixed-diameter sleeve, contracts with the air sleeve during rebound, and expands during jounce, to provide full-time support of the air sleeve, as best seen in Figure 2, for optimised durability and improved air spring performance. Vehicle cornering is improved, since the outside air spring experiences increased roll pressure and the support sleeve optimises the strength of the air sleeve by providing full support during this action. The reduced-diameter opposing air spring is also fully supported by its sleeve 184. Accordingly, since roll stiffness is increased, a stabilizer bar is not needed with the air spring damper suspension.

The lower portion 188 of the support sleeve which appears below the rolling lobe and increases and decreases in height as the damper strokes is constricted to the designed undeflected diameter, which is less than the outside diameter of the rolling lobe. With this construction, a varying-diameter restricted passage 192 is provided between the support sleeve and the reservoir tube, to minimise the entry of foreign matter into the interior of the support sleeve, and to reduce abrasion and wear of the support sleeve and the air spring sleeve.

Figure 5 diagrammatically illustrates an electronically controlled levelling system incorporating the air spring damper units 12, 12 adjacent opposite outboard ends of the rear axle 10. The system comprises an electric motor-driven single-piston type air compressor 200 that provides pressure air through lines 202, 204, 206, 158 and 159 to the air spring dampers 12, 12 at the rear corners of the vehicle to selectively raise and lower the rear suspension. This maintains trim height under varying loading conditions, and the units provide rear damping. An air dryer 208 operatively interposed in the lines between the compressor and the air spring dampers 12, 12 contains a desiccant to remove water and water vapour from the compressed air before the air flows to the air spring dampers 12, 12.

Blocker valves 210 and 212 pneumatically connected between the air dryer and the air spring dampers are normally closed to inhibit reverse flow from the air spring dampers. These valves are electrically activated by signals from an electronic height sensor 214 supplied with battery and ignition input voltages. The blocker valves also mechanically open at a predetermined pressure differential when the compressor 200 is running, to limit the pressure of air supplied to the dampers.

The electronic height sensor is a solid-state device which electronically detects the height of the car or other vehicle and effects energisation of the compressor 200 through a relay 215 to keep the vehicle in trim by increasing the supply of pressure air to the air spring dampers. A rotatable shutter interrupts internally produced light beams to detect this trim height. The turning motion for this is provided by a lever and arm which is operatively connected to the axle 10 by means of an articulated link. An exhaust solenoid is located in the compressor, and exhausts air from the dampers when energised by the height sensor, to lower the body to trim height. A normally open and electrically activated fill valve closes to seal the compressor head when the compressor is running. Air is supplied to the compressor through an intake filter 220 which filters the air before it enters the compressor head. This filter also provides the exit for air being exhausted when the exhaust solenoid is activated.

With an air spring damper in accordance with the present invention there is automatic resistance to vehicle roll, since the air spring damper resisting the roll will increase in pressure and spring rate, whereas the opposing damper will decrease in pressure and spring rate.

The hysteresis curve of Figure 6, in which force in Newtons is plotted against travel in mm, illustrates the energy management action of the air spring damper 12 during jounce and rebound. At point A on the jounce (load) side J of the curve, the jounce bumper 102 is fully compressed, and the piston 65 is in the phantom-line position shown in Figure 2. From this point, the rebound (unloaded) side R of the curve is generated as the spring damper elongates in rebound action. At point B on the rebound side R, the contact member 100 of the piston moves off the expanding jounce bumper, and the rebound side of the curve flattens out. Rebound action is controlled, with damping being provided by the restriction provided by the flexed internal diameter of the valve discs 78 as the air is forced by the piston 65 from the central chamber 96 to the lower chamber 86.

Air in the lower chamber 86 can flow through the passage 224 provided by the hollow piston rod and through the cross opening 160 therein to the air spring chamber 174.

At point C, the elastomeric rebound bumper 176 contacts the rebound stop 54, and is deflected to increase resistance to rebound. At point D, the rebound stop has fully deflected the rebound bumper, and rebound action is thus cushioned and terminated.

Jounce action is the load side of the curve, and from point D the air spring damper telescopes together and damping is provided by the restriction as defined by the deflected outer diameter of the discs and the surface 84 of the carrier plate 75.

Air is metered from the contracting lower chamber 86 to the expanding intermediate chamber 96 through the piston as the piston assembly 65 moves further into the reservoir tube 30.

After passage through the static vehicle position E, corresponding to zero mm on the abscissa of the curve, the contact plate 100 strikes the upper end of the jounce bumper 102. This contact may occur at point F, and the jounce bumper provides progressive resistance to jounce action, and effectively stores jounce energy, as it collapses and constricts to the small space 226 below the piston assembly 65 at full jounce, as shown in the phantom-line position.

At full jounce, the piston has stroked 70 mm in the negative direction past the static vehicle position E, and the upper end 221 of the reservoir tube has contacted the lower end of the rate washer 114. The last amount of jounce travel is effectively cushioned by the inner collar portion 222 of the isolator 120.

Figure 7 shows curves illustrating operation of the air spring damper in accordance with the present invention in damping the differing natural frequencies of the axle and body, and further shows how the damper acts as a spring at frequencies higher than the natural frequency, and differs from the action of a hydraulic damper at these higher frequencies. The ordinate $W_D$ is work in joules, and the abscissa is frequency in Hertz. The curve M shows operation of the damper with five discs having a predetermined overall thickness and spring rate. The natural frequency of the body is 1 Hz, and there is effective body damping.

This body damping can readily be increased by increasing the preload on the valve discs 78. This can be done by increasing the thickness of the carrier plate 75. With increased preload, the damping work $W_D$ at the 1 Hz natural frequency is substantially increased, as shown by the curve M'.

The natural frequency of the axle is 12 Hz, and the curves M and M' show optimised damping of the axle. At frequencies higher than the natural frequency of 12 Hz, the curves M and M' droop, to illustrate the spring action of the damper. This action is contrasted with that of a hydraulic damper, whose action beyond the 12 Hz natural frequencies is illustrated by curve H. As axle frequency increases, a hydraulic lock will occur in a hydraulic damper, and the excitations are then fed into the body of the vehicle, to detract from the comfort of the occupants of the vehicle and also detract from vehicle control.

Curve N illustrates damping work done with five valve discs 78 having a reduced overall thickness as compared with that of the first example, and illustrated by the curves M, M'. Since maximum damping with this valve sizing occurs at about 20 Hz, this valving is not as effective as the first example (curves M or M'). The super-critical frequencies above the 12 Hz natural frequency of the axle up to 20 Hz will be fed into the body of the vehicle, detracting from comfort and vehicle handling. After reaching 20 Hz, the damper acts as a spring to store energy.

Although the air spring damper of the second example is not as effective as that of the first example, it offers an improvement over a hydraulic damper unit, which would hydraulically lock and feed higher frequency into the body, as shown by curve H'. Body damping can be increased by increasing the preload of the valve, as in the first example.

Although the air spring damper has been shown and described as damping natural axle frequency, the axle can comprise any structure supporting a road wheel.

Also, other gases having relevant properties generally similar to air can be used as a pneumatic working medium instead of air, such that references herein to an air spring damper can include the possibility of the damper utilising a gas other than air as its pneumatic working medium.

## Claims

1. An air spring damper for the suspension of a vehicle body with respect to a support for a road wheel, having a variable-volume air spring chamber (174) in fluid communication with an air reservoir chamber (96) by way of means (65) providing pneumatic damping of air flow between the respective chambers (174,96), characterised in that the air spring damper (12) comprises an elongate reservoir tube (30) having pressurised air therein, means (34) attaching a lower end portion of the reservoir tube (30) to the road wheel support (24), a valved piston (65) mounted for reciprocatory jounce and rebound stroking movement within the reservoir tube (30) and defining intermediate (96) and lower (86) chambers and restricting the flow of air therethrough to dissipate the energy of the natural frequency of the wheel support (24) and the differing natural frequency of the vehicle body (26), a top mount (112) attached to the body, a piston rod (62) attached to the piston (65) and extending from the reservoir tube (30) into connection with the top mount (112), and air spring means (164) defining an upper chamber (174) extending around the piston rod (62) and operatively mounted between the upper end of the reservoir tube (30) and the top mount (112) for rolling movement thereon, a piston rod guide (54) and piston rod guide bearing means (56,63) slidably receiving the piston rod (62) and closing the upper end of the reservoir tube (30), and passage means (146) for supplying pressurised air to the air spring means (164) to effect the air spring suspension of the vehicle body (26) with respect to the wheel support (24), whereby the air spring damper is effective to damp the natural frequency of the road wheel support (24) and also the natural frequency of the vehicle body (26).

2. An air spring damper according to claim 1, characterised in that the air spring means (164) is of elastomeric material, and the air spring damper (12) includes a resilient outer support sleeve (184) providing full-time support of the air spring means (164) during both jounce and rebound motion of the air spring damper (12).

3. An air spring damper according to claim 2, characterised in that the outer support sleeve (184) comprises a cylindrical sleeve of elastomeric material and contacts the outer periphery of the elastomeric air spring means (164).

4. An air spring damper according to any one of claims 1 to 3, characterised in that the air spring damper (12) also includes retainer means (172) connecting an air sleeve (164) constituting the air spring means to the upper portion of the reservoir tube (30), and piston means (175) mounted over the retainer means (172) and defining a varying-diameter surface for a rolling lobe (168) of the air sleeve (164), to change the spring rate of the air spring as the piston (65) of the air spring damper (12) moves in jounce and rebound.

5. An air spring damper according to any one of claims 1 to 4, characterised in that the piston rod (62) is hollow and provides fluid interconnection between the upper (174) and lower (86) chambers so that pressure air in the upper (174) and lower (86) chambers exerts a lifting force on the piston (65) to supplement the force exerted on the vehicle body (26) by the pressure in the upper chamber (174).

6. An air spring damper according to any one of claims 1 to 5, characterised in that the valved piston (65) comprises a piston shell (66), an orifice plate (74) housed in the piston shell (66), and a plurality of valve discs (78) mounted in the orifice plate (74) and having inner and outer diameters deflectable to meter and restrict the flow of air through the piston (65) on jounce and rebound stroking movement of the piston (65).

7. An air spring damper according to claim 6, characterised in that the piston shell (66) of the valved piston (65) is attached to the lower end of the piston rod (62), a band-like seal (68) is carried by the piston shell (66) along the outer periphery thereof for sliding and sealing contact with the inner wall of the reservoir tube (30), and spring means (72) is interposed between the seal (68) and the piston shell (66) for resiliently urging the seal (68) into close sealing and sliding contact with the inner wall of the reservoir tube (30).

8. An air spring damper according to any one of claims 1 to 7, characterised in that the rod guide bearing (63) is a thin-walled unit pressed into the rod guide (56) to provide lubricated support of the piston rod (62) as it moves in jounce and rebound.

9. An air spring damper according to any one of claims 1 to 8, characterised in that the rod guide bearing (56,63) comprises a sleeve (63) of sintered bronze and polytetrafluorethylene material, and that the polytetrafluorethylene material has molecules thereof aligned with the direction of piston rod travel, to reduce sliding friction.

10. An air spring damper according to claim 9, characterised in that the piston rod guide (56) has flared upper and lower openings to accommodate rocking of the piston rod (62) during stroking action of the air spring damper (12), the rod guide bearing means (56) is pressed into the rod guide (56), and the sleeve (63) of sintered bronze and polytetrafluorethylene material is effective to provide improved anti-friction sliding engagement with the piston rod (62) by liquefying when the bronze is heated to a predetermined temperature by heat developed as a result of frictional sliding engagement with the piston rod (62).

11. An air spring damper according to any one of claims 1 to 10, characterised in that the top mount (112) includes an elastomeric annuluse (120) which isolates the piston rod (62) from the vehicle body (26), pivotally connects the piston rod (62) to the vehicle body (26), and seals the top of the air spring chamber (174) and cushions the last travel of the air spring damper (12) in rebound.

12. An air spring damper according to any one of claims 1 to 11, characterised in that valve disc means (78) is operatively mounted in the piston (65) and is deflectable to restrict the flow of air through the piston (65) to optimise damping of the natural frequency of the wheel support (24) and providing diminishing dissipation of energy at the wheel support frequency beyond the said natural frequency and to further damp the lower natural frequency of the vehicle body (26).

13. An air spring damper according to any one of claims 1 to 12, characterised in that the reservoir attaching means comprises a base cup (34), and that a jounce bumper (102) is mounted in the reservoir tube (30) below the piston (65) to provide increasing resistance to jounce and is constrictable into the base cut (34) at full jounce.

14. An air spring damper according to any one of claims 1 to 12, characterised in that the top mount (112) comprises an elastomeric upper mount connected to the vehicle body (26) and preloaded between upper and lower supports (142,114) affixed to the piston rod (62).

**Patentansprüche**

1. Luftfederdämpfer für die Aufhängung einer Fahrzeugkarosserie bezüglich eines Trägers für ein Straßenrad, mit einer Luftfederkammer (174) mit variablem Volumen, die in Fluidverbindung mit einer Luftspeicherkammer (96) über Mittel (65) steht, die eine pneumatische Luftströmungs-Dämpfung zwischen den jeweiligen Kammern (174, 96) schaffen, dadurch gekennzeichnet, daß der Luftfederdämpfer (12) umfaßt: ein längliches Speicherrohr (30) mit darin befindlicher Druckluft, Mittel (34), die einen unteren Endabschnitt des Speicherrohres (30) an dem Straßenrad-Träger (24) befestigen, einen Ventil-Kolben (65), der zur hin- und hergehenden Ein- und Ausfeder-Hubbewegung innerhalb des Speicherrohres (30) angebracht ist und Zwischen(96) und untere (86) Kammern bestimmt und die Strömung von Luft dort hindurch begrenzt, um die Energie der Eigenfrequenz der Radträger (24) und der sich davon unterscheidenden Eigenfrequenz der Fahrzeugkarosserie (26) zu verbrauchen, eine an der Karosserie angebrachte obere Befestigung (112), eine an dem Kolben (65) angebrachte Kolbenstange (62), die von dem Speicherrohr (30) bis in die Verbindung mit der oberen Befestigung (112) reicht, und eine eine obere, die Kolbenstange (62) umgebende Kammer (174) bestimmende Luftfedereinrichtung (164), die wirksam zwischen dem oberen Ende des Speicherrohres (30) und der oberen Befestigung (112) zur Rollbewegung daran angebracht ist, eine Kolbenstangenführung (54) und Kolbenstangenführungs-Lagermittel (56, 63), die gleitend die Kolbenstange (62) aufnehmen und das obere Ende des Speicherrohres (30) schließen, und Durchlaßmittel (146) zum Zuführen von Druckluft zu der Luftfedereinrichtung (164), um die Luftfederaufhängung der Fahrzeugkarosserie (26) bezüglich des Radträgers (24) zu bewirken, wodurch der Luftfederdämpfer wirksam ist, die Eigenfrequenz des Straßenrad-Trägers (24) und auch die Eigenfrequenz der Fahrzeugkarosserie (26) zu dämpfen.

2. Luftfederdämpfer nach Anspruch 1, dadurch gekennzeichnet, daß die Luftfedereinrichtung (164) aus elastomerem Material besteht und daß der Luftfederdämpfer (12) eine elastische äußere Stützhülse (184) enthält, die eine Vollzeitabstützung der Luftfedereinrichtung (164) während der Ein- wie der Ausfederbewegung des Luftfederdämpfers (12) schafft.

3. Luftfederdämpfer nach Anspruch 2, dadurch gekennzeichnet, daß die äußere Stützhülse (184) eine zylindrische Hülse aus elastomerem Material umfaßt und den Außenumfang der elastomeren Luftfedereinrichtung (164) berührt.

4. Luftfederdämpfer nach einem der Ansprüche 1 bis 3, dadurch gekennzeichnet, daß der Luftfederdämpfer (12) auch Rückhaltemittel (172) enthält, welche eine die Luftfederungseinrichtung bildende Lufthülse (164) mit dem oberen Abschnitt des Speicherrohres (30) verbindet, und über den Rückhaltermitteln (172) angebrachte Kolbenmittel (175), die eine Fläche mit sich änderndem Durchmesser für eine Rollwand (168) der Lufthülse (164) bildet, um die Federkonstante der Luftfeder zu ändern, während der Kolben (65) des Luftfederdämpfers (12) sich ein- und ausfedernd bewegt.

5. Luftfederdämpfer nach einem der Ansprüche 1 bis 4, dadurch gekennzeichnet, daß die Kolbenstange (62) hohl ist und Fluidverbindung zwischen der oberen (174) und der unteren (86) Kammer schafft, so daß Druckluft in der oberen (174) und der unteren (86) Kammer eine Hebekraft auf den Kolben (65) ausübt, um die durch den Druck in der oberen Kammer (174) auf die Fahrzeugkarosserie (76) ausgeübte Kraft zu ergänzen.

6. Luftfederdämpfer nach einem der Ansprüche 1 bis 5, dadurch gekennzeichnet, daß der Ventil-Kolben (65) einen Kolbenmantel (66) umfaßt, eine in dem Kolbenmantel (66) aufgenommene Mündungsplatte (74) und eine Vielzahl von an der Mündungsplatte (74) angebrachten Ventilscheiben (78) mit inneren und äußeren Durchmessern, welche zum Zumessen und Begrenzen der Luftströmung durch den Kolben (65) bei einer Ein- und Ausfederungsbewegung des Kolbens (65) abbiegbar sind.

7. Luftfederdämpfer nach Anspruch 6, dadurch gekennzeichnet, daß der Kolbenmantel (66) des Ventil-Kolbens (65) am unteren Ende der Kolbenstange (62) angebracht ist, daß eine bandartige Dichtung (68) an dem Kolbenmantel (66) längs dessen Außenumfang zur Gleit- und Dicht-Berührung mit der Innenwand des Speicherrohres (30) gehalten ist, und daß Federmittel (72) zwischen der Dichtung (68) und dem Kolbenmantel (66) eingesetzt sind zur elastischen Drängung der Dichtung (68) in enge Dicht- und Gleit-Berührung mit der Innenwand des Speicherrohres (30).

8. Luftfederdämpfer nach einem der Ansprüche 1 bis 7, dadurch gekennzeichnet, daß die Stangenführungs-Lagerung (63) eine in die Stangenführung (56) eingedrückte dünnwandige Einheit ist, um eine durch Schmiermittel unterstützte Abstützung der Kolbenstange (62) während ihrer Bewegung beim Ein- und Ausfedern zu schaffen.

9. Luftfederdämpfer nach einem der Ansprüche 1 bis 8, dadurch gekennzeichnet, daß die Stangenführungs-Lagerung (56, 63) eine Hülse (63) aus Sinterbronze- und Polytetrafluorethylen-Material umfaßt, und daß das Polytetrafluorethylen-Material mit der Richtung des Kolbenstangenlaufes ausgerichtete Moleküle besitzt, um Gleitreibung zu reduzieren.

10. Luftfederdämpfer nach Anspruch 9, dadurch gekennzeichnet, daß die Kolbenstangenführung (56) aufweitende obere und untere Öffnungen besitzt zur Aufnahme von Schwankungen der Kolbenstange (62) während der Hubbewegung des Luftfederdämpfers (12), wobei das Stangenführungs-Lagermittel (56) in die Stangenführung (56) eingepreßt ist und die Hülse (63) aus Sinterbronze- und Polytetrafluorethylen-Material wirksam ist, verbesserte reibarme Gleitanlage mit der Kolbenstange (62) durch Verflüssigung zu ergeben, wenn die Bronze bis zu einer vorbestimmten Temperatur aufgeheizt wird durch infolge von Reibgleitanlage an der Kolbenstange (62) entwickelter Wärme.

11. Luftfederdämpfer nach einem der Ansprüche 1 bis 10, dadurch gekennzeichnet, daß die obere Befestigung (112) einen elastomeren Ring (120) enthält, der die Kolbenstange (62) gegen die Fahrzeugkarosserie (26) isoliert, die Kolbenstange (62) schwenkbar mit der Fahrzeugkarosserie (26) verbindet und die Oberseite der Luftfederkammer (174) abdichtet und den letzten Hubweg des Luftfederdämpfers (12) im Rückprall abpolstert.

12. Luftfederdämpfer nach einem der Ansprüche 1 bis 11, dadurch gekennzeichnet, daß Ventilscheibenmittel (78) wirksam in dem Kolben (65) angebracht und abbiegbar ist, um die Luftströmung durch den Kolben (65) zu beschränken, die Dämpfung der Eigenfrequenz des Radträgers (24) zu optimieren und abnehmenden Verbrauch von Energie der Radträgerfrequenz jenseits der Eigenfrequenz zu schaffen und die niedrigere Eigenfrequenz der Fahrzeugkarosserie (26) weiter zu dämpfen.

13. Luftfederdämpfer nach einem der Ansprüche 1 bis 12, dadurch gekennzeichnet, daß das Speicher-Befestigungsmittel eine Grundpfanne (34) umfaßt und daß ein Einfeder-Puffer (102) in dem Speicherrohr (30) unter dem Kolben (65) angebracht ist, um zunehmenden Widerstand bei Einfederung zu schaffen, und bei voller Einfederung in die Grundpfanne (34) verengbar ist.

14. Luftfederdämpfer nach einem der Ansprüche 1 bis 12, dadurch gekennzeichnet, daß die obere Befestigung (112) eine an der Fahrzeugkarosserie (26) angebrachte obere elastomere Befestigung umfaßt, die zwischen oberen und unteren, an der Kolbenstange (62) angebrachten Stützen (142, 114) vorgespannt ist.

## Revendications

1. Amortisseur ressort pneumatique pour la suspension d'une caisse de véhicule par rapport à un support de roue, comprenant une chambre de ressort pneumatique à volume variable (174) qui est en communication pour la transmission du fluide avec une chambre réservoir d'air (96) à l'aide de moyens (65) qui assurent l'amortissement pneumatique de l'air entre les chambres respectives (174, 96), caractérisé en ce que l'amortisseur ressort pneumatique (12) comprend un tube réservoir (30) de forme allongée renfermant de l'air sous pression, des moyens (34) qui fixent une partie d'extrémité inférieure du tube réservoir (30) au support de roue (24), un piston à clapets (65) monté pour décrire un mouvement alternatif de course de compression et de course d'extension à l'intérieur du tube réservoir (30) et définissant une chambre intermédiaire (96) et une chambre inférieure (86), et qui étrangle l'écoulement de l'air à travers lui pour dissiper l'énergie de la fréquence propre du support de la caisse (26) du véhicule, une fixation supérieure (112) fixée au corps, une tige de piston (62) fixée au piston (65) et qui fait saillie depuis le tube réservoir (30) jusqu'à un raccordement avec la fixation supérieure (112) et des moyens (164) formant un ressort pneumatique, qui définissent une chambre supérieure (174) s'étendant autour de la tige de piston (62) et qui sont montés fonctionnellement entre l'extrémité supérieure du tube réservoir (30) et la fixation supérieure (112) pour décrire un mouvement de roulement sur cette extrémité, un guide-tige de piston (54) et des moyens de portée (56, 63) du guide tige de piston, qui reçoivent à coulissement la tige de piston (62) et ferment l'extrémité supérieure du tube réservoir (30) et des moyens de passage (146) servant à envoyer de l'air comprimé aux moyens formant ressort pneumatique (164) pour assurer la suspension de la cuisse (26) du véhicule par rapport au support de roue (24) par ressort pneumatique, l'amortisseur ressort pneumatique pouvant ainsi efficacement amortir la fréquence propre du support de roue (24) et aussi la fréquence propre de la caisse (26) du véhicule.

2. Amortisseur ressort pneumatique selon la revendication 1, caractérisé en ce que les moyens formant ressort pneumatique (164) sont en matière élastomère et l'amortisseur ressort pneumatique (12) comprend un manchon d'appui extérieur élastique (184) qui assure un appui constant aux moyens formant ressort pneumatique (164) aussi bien pendant le mouvement de compression que pendant le mouvement d'extension de l'amortisseur ressort pneumatique (12).

3. Amortisseur ressort pneumatique selon la revendication 2, caractérisé en ce que le manchon d'appui extérieur (184) comprend un manchon cylindrique en matière élastomère et est en contact avec la périphérie extérieure des moyens formant ressort pneumatique en élastomère (164).

4. Amortisseur ressort pneumatique selon une quelconque des revendications 1 à 3, caractérisé en ce que l'amortisseur ressort pneumatique (12) comprend en outre des moyens de retenue (172) qui relient un manchon pneumatique (164) constituant les moyens formant ressort pneumatique à la partie supérieure du tube réservoir (30) et des moyens du type piston (175) montés sur les moyens de retenue (172) et définissant une surface à diamètre variable pour un lobe roulant (168) du manchon pneumatique (164) de manière à faire varier la caractéristique élastique du ressort pneumatique lorsque le piston (65) de l'amortisseur ressort pneumatique (12) décrit ses mouvements de compression et d'extension.

5. Amortisseur ressort pneumatique selon une quelconque des revendications 1 à 4, caractérisé en ce que la tige de piston (62) est creuse et établit une interconnexion de transmission du fluide entre la chambre supérieure (174) et la chambre inférieure (86), de sorte que l'air sous pression contenu dans la chambre supérieure (174) et la chambre inférieure (86) exerce une force élévatrice sur le piston (65) qui s'ajoute à la force exercée sur la caisse (26) du véhicule par la pression régnant dans la chambre supérieure (74).

6. Amortisseur ressort pneumatique selon une quelconque des revendications 1 à 5, caractérisé en ce que le piston à clapets (65) comprend une enveloppe de piston (66), une plaque à orifices (74) contenue dans l'enveloppe (66) du piston, et une pluralité de disques de clapets (78) montés dans la plaque à orifices (74) et qui possèdent une circonférence intérieure et une circonférence extérieure capables de fléchir pour doser et étrangler l'écoulement de l'air à travers le piston (65) qui se produit pendant les mouvements du piston (65) dans ses courses de compression et d'extension.

7. Amortisseur ressort pneumatique selon la revendication 6, caractérisé en ce que l'enveloppe de piston (66) du piston à clapets (65) est fixée à l'extrémité inférieure de la tige de piston (62), une garniture d'étanchéité en forme de bande (68) est portée par l'enveloppe de piston (66), le long de sa périphérie extérieure, pour entrer en contact glissant et étanche avec la paroi intérieure du tube réservoir (30), et des moyens élastiques (72) sont interposés entre la garniture d'étanchéité (68) et l'enveloppe (66) du piston pour tendre à mettre la garniture d'étanchéité élastiquement en contact étroit, étanche et glissant, avec la paroi intérieure du tube réservoir (30).

8. Amortisseur ressort pneumatique selon l'une quelconque des revendications 1 à 7, caractérisé en ce que la portée (63) du guide-tige est une unité à paroi mince emmanchée à force dans le guide-tige (56) pour donner un appui lubrifié à la tige de piston (62) lorsqu'elle se déplace dans ses courses de contraction et d'extension.

9. Amortisseur ressort pneumatique selon une quelconque des revendications 1 à 8, caractérisé en ce que la portée (56, 63) du guide-tige comprend un manchon (63) fait de bronze fritté et de polytétrafluoréthylène, et en ce que le polytétrafluoréthylène présente ses molécules alignées sur la direction de la course de la tige de piston, pour réduire le frottement de glissement.

10. Amortisseur ressort pneumatique selon la revendication 9, caractérisé en ce que le guide-tige de piston (56) présente des ouvertures supérieure et inférieure évasées pour permettre un mouvement d'oscillation de la tige de piston (62) pendant l'action de débattement de l'amortisseur ressort pneumatique (12), les moyens de portée (56) du guide-tige sont emmanchés à force dans le guide-tige (56) et le manchon (63) fait de bronze fritté et de polytétrafluoréthylène assurent efficacement un contact de glissement anti-friction amélioré avec la tige de piston (62) en se liquéfiant lorsque le bronze est chauffé à une température prédéterminée par la chaleur dégagée par suite du contact glissant à frottement avec la tige de piston (62).

11. Amortisseur ressort pneumatique selon une quelconque des revendications 1 à 10, caractérisé en ce que la fixation supérieure (112) comprend une bague en élastomère (120) qui isole la tige de piston (62) de la caisse (26) du véhicule, articule la tige de piston (62) sur la caisse (26) du véhicule, ferme à joint étanche l'extrémité supérieure de la chambre de ressort pneumatique (174), et amortit la dernière partie de la course de l'amortisseur ressort pneumatique (12) dans son mouvement d'extension.

12. Amortisseur ressort pneumatique selon une quelconque des revendications 1 à 11, caractérisé en ce que des moyens formant disques de clapets (78) sont montés fonctionnellement dans le piston (65) et peuvent fléchir pour étrangler l'écoulement de l'air à travers le piston (65) afin d'optimiser l'amortissement de la fréquence propre du support de roue (24) et assurer la diminution de la dissipation d'énergie aux fréquences du support de roue qui excèdent ladite fréquence propre, et pour amortir encore davantage la fréquence propre, et pour amortir encore davantage la fréquence propre, plus basse, de la caisse (26) du véhicule.

13. Amortisseur ressort pneumatique selon une quelconque des revendications 1 à 12, caractérisé en ce que les moyens de fixation du réservoir comprennent une coupelle de base (34) et en ce qu'un tampon de cahotement (102) est monté dans le tube réservoir (30) au-dessous du piston (65) pour exercer une résistance augmentée au cahotement, et qui peut se rétracter dans la coupelle de base (34) à la pleine course de cahotement.

14. Amortisseur ressort pneumatique selon une quelconque des revendications 1 à 12, caractérisé en ce que la fixation supérieure (112) comprend une fixation supérieure en élastomère reliée à la caisse (26) du véhicule et précontrainte entre des supports supérieur et inférieur (142, 114), qui sont reliés à la tige de piston (62).

Fig. 1

Fig. 2

Fig. 3

Fig. 4

Fig. 5

Fig.6

Fig. 7